# NOUVEAU FASCICULE DE BREVET EUROPEEN

(11) **EP 0 692 179 B2**
(45) Date de publication et mention de la décision concernant l'opposition: **18.08.2004**
(45) Mention de la délivrance du brevet: 20.10.1999
(21) Numéro de dépôt: 95440039.6
(22) Date de dépôt: 04.07.1995
(51) Int. Cl.: A01B 73/04, A01C 7/08

(54) **Semoir à grande largeur de travail**
Sämaschine mit einer grossen Arbeitsbreite
Seeder with a great working breadth

(30) Priorité: 13.07.1994 FR 9408881
(43) Date de publication de la demande: 17.01.1996
(73) Titulaire: KUHN-HUARD S.A., 44110 Chateaubriant (FR)
(72) Inventeur: Perret, Louis, F-44110 Chateaubriant (FR); Gentilhomme, Guy, F-44110 Louisfert (FR); Challon, Patrice, F-44110 Chateaubriant (FR)
(74) Mandataire: Andres, Jean-Claude

(56) Documents cités:
- EP-A- 0 269 149
- EP-A- 0 420 734
- DE-U- 9 213 091
- DE-U- 9 214 242
- FR-A- 2 577 747
- US-A- 4 562 779
- Prospectus HUARD SD-3000
- Prospectus HORSCH Doppelscheibenschar Drillmaschine DS6
- Prospectus HORSCH Sä-Technik
- Fundamentals of machine operation (John Deere) - chapter 4, pages 99, 103, 114-117

## Description

La présent invention concerne un semoir comportant :
- un timon d'attelage destiné à être lié à son extrémité frontale à un véhicule moteur au moyen d'une articulation,
   et
- un corps comportant
   * un châssis composé :
      - d'un châssis avant lié audit timon d'attelage, portant des outils ouvreurs et s'appuyant sur le sol au moyen de roues qui y sont liées de manière déplaçable en hauteur au moyen d'organes de liaison, et
      - d'un châssis arrière lié au châssis avant au moyen d'une articulation centrale d'axe longitudinal au moins sensiblement vertical,
      et
   * un dispositif de semis comportant entre autre une trémie et des organes d'implantation de graines dans le sol, ces derniers étant portés par le châssis arrière.

Il est connu dans l'état de la technique un tel semoir (semoir HUARD SD-3000) dont les outils ouvreurs sont liés à une poutre rigide fixée sur le châssis avant et dont les organes d'implantation de graines dans le sol sont liés à un longeron également rigide et fixé sur le châssis arrière. Dans ce semoir connu, le châssis arrière et les organes d'implantation qu'il porte peuvent pivoter durant le travail par rapport au châssis avant et aux outils ouvreurs liés à ce dernier. Les organes d'implantation de graines dans le sol peuvent ainsi suivre les traces des outils ouvreurs. Au transport, des moyens de verrouillage condamnent avantageusement le pivotement du châssis arrière par rapport au châssis avant en vue d'une bonne stabilité du semoir durant la phase de transport.

Etant donné que la poutre portant les outils ouvreurs et le longeron portant les organes d'implantation de graines dans le sol de ce semoir connu sont rigides et sont fixés rigidement au châssis, sa largeur de travail maximale est limitée à la largeur maximale autorisée pour circuler sur route.

Il serait certes possible de construire un tel semoir d'une largeur de travail supérieure à la largeur maximale autorisée sur route, mais ceci supposerait de transporter le semoir sur une remorque. Ceci présente un certain nombre d'inconvénients dont notamment la nécessité d'acquérir une remorque spéciale adaptée au transport du semoir sur route.

La présente invention a ainsi pour but de réaliser un semoir d'une largeur de travail supérieure à la largeur maximale autorisée pour circuler sur route tout en présentant tout ou partie des avantages du semoir connu.

A cet effet, le semoir selon l'invention est caractérisé en ce
- que les outils ouvreurs sont liés à au moins deux rampes indépendantes l'une de l'autre, liées chacune au châssis avant au moyen d'une articulation respective d'axe dirigé vers l'avant,
- que les organes d'implantation de graines dans le sol sont liés à au moins deux rampes indépendantes l'une de l'autre, liées chacune au châssis arrière au moyen d'une articulation respective d'axe dirigé vers l'avant,
- qu'il est prévu au moins un moyen permettant le pivotement desdites rampes autour de l'axe de leur articulation respective d'une position de travail où lesdites rampes s'étendent au moins sensiblement horizontalement et transversalement à la direction de travail dans une position de transport où elles s'étendent vers le haut, respectivement de ladite position de transport dans ladite position de travail, et
- que la trémie fixée sur le châssis avant s'étend entre les outils ouvreurs et les organes d'implantation.

Dans le semoir selon l'invention, les deux rampes portant les organes d'implantation de graines dans le sol sont liées au châssis arrière et peuvent ainsi pivoter durant le travail, autour de l'axe de l'articulation centrale par rapport aux deux rampes portant les outils ouvreurs et liées au châssis avant. Lesdits organes d'implantation de graines dans le sol peuvent ainsi parfaitement suivre les traces des outils ouvreurs et y déposer les graines.

Etant donné que chacune desdites rampes est liée au châssis au moyen d'une articulation respective d'axe dirigé vers l'avant et qu'il est prévu au moins un moyen permettant le pivotement desdites rampes autour de l'axe de leur articulation respective, celles-ci peuvent être déployées en position de travail et repliées en position de transport. En position de travail, elles s'étendent au moins sensiblement horizontalement et transversalement à la direction de travail.

Elles peuvent ainsi travailler des bandes de terre plus larges que la largeur maximale autorisée pour le transport sur route. En position de transport par contre, elles s'étendent vers le haut de sorte que l'encombrement transversal du semoir permette son transport sur route.

La trémie enfin s'étend entre les outils ouvreurs et les organes d'implantation. Grâce à cette position, les rampes peuvent être bien repliées pour le transport. Du reste, la répartition des masses tant au travail qu'au transport est très bonne.

Selon des caractéristiques supplémentaires de l'invention :
- l'axe d'une articulation liant une rampe à outils ouvreurs au châssis avant pourra être au moins sensiblement parallèle à la direction de travail ou être dirigé, en vue de côté, vers l'avant et quelque peu vers le bas et, en vue de dessus, au moins sensiblement parallèlement à la direction de travail,
- l'axe d'une articulation liant une rampe à organes d'implantation au châssis arrière pourra être au moins sensiblement parallèle à la direction de travail ou être dirigé, en vue de côté, vers l'avant et quelque peu vers le haut et, en vue de dessus, au moins sensiblement parallèlement à la direction de travail.

Lorsque l'axe d'une articulation liant une rampe à outils ouvreurs au châssis avant sera dirigé, en vue de côté, vers l'avant et quelque peu vers le bas et/ou que l'axe d'une articulation liant une rampe à organes d'implantation au châssis arrière sera dirigé, en vue de côté, vers l'avant et quelque peu vers le haut, alors l'espace entre les outils ouvreurs et les organes d'implantation sera, en position de transport, plus important, ce qui permet d'y loger une trémie d'un volume plus grand.

Selon une autre caractéristique supplémentaire de l'invention, les articulations liant les rampes à outils ouvreurs au châssis avant, respectivement les articulations liant les rampes à organes d'implantation au châssis arrière pourront avantageusement s'étendre au moins sensiblement symétriquement par rapport au plan vertical passant par l'articulation centrale et dirigé suivant la direction de travail.

Selon une autre caractéristique supplémentaire de l'invention, il pourra être avantageusement prévu qu'une articulation liant une rampe à outils ouvreurs au châssis avant, respectivement une articulation liant une rampe à organes d'implantation au châssis arrière, soit implantée dans le voisinage de l'extrémité intérieure de ladite rampe à outils ouvreurs, respectivement dans le voisinage de l'extrémité intérieure de ladite rampe à organes d'implantation.

La réduction de l'encombrement transversal du semoir sera ainsi relativement importante.

Dans ce cas, il sera avantageux de prévoir :
- qu'en position de travail, les deux outils ouvreurs s'étendant aux extrémités intérieures adjacentes des deux rampes à outils ouvreurs soient positionnés au moins sensiblement comme deux outils ouvreurs adjacents d'une même rampe à outils ouvreurs,
   et/ou
- qu'en position de travail, les deux organes d'impiantation s'étendant aux extrémités intérieures adjacentes des deux rampes à organes d'implantation soient positionnés au moins sensiblement comme deux organes d'implantation adjacents d'une même rampe à organes d'implantation.

Les outils ouvreurs et les organes d'implantation pourront ainsi travailler de manière au moins sensiblement uniforme sur toute la largeur du semoir.

Selon une autre caractéristique supplémentaire de l'invention, il pourra également être avantageusement prévu qu'en position de travail, les rampes à outils ouvreurs et les rampes à organes d'implantation s'étendent au moins sensiblement orthogonalement à la direction de travail.

Selon une autre caractéristique supplémentaire de l'invention, chaque organe d'implantation pourra avantageusement s'étendre, en vue de dessus et suivant la direction de travail, au moins sensiblement à la même distance de l'articulation centrale que l'outil ouvreur correspondant.

Dans l'invention, il pourra également être prévu
- qu'à chaque rampe soit associé un moyen permettant son pivotement autour de l'axe de son articulation respective
ou
- qu'à chaque paire de rampes à outils ouvreurs, respectivement à chaque paire de rampes à organes d'implantation soit associé un moyen commun permettant leur pivotement autour de l'axe de leur articulation respective.

Dans le premier cas, il pourra également être prévu qu'une rampe à organes ouvreurs et la rampe à organes d'implantation correspondante puissent être pivotées en position de transport indépendamment des autres rampes.

Dans une solution préférentielle, le (les) moyen(s) permettant le pivotement des rampes autour de l'axe de leur articulation respective comportera(ont) un (des) vérin(s) hydraulique(s).

Dans ce cas notamment, chaque rampe pourra être verrouillée en position de transport par un dispositif de verrouillage mécanique correspondant.

Dans l'invention, il pourra également être prévu que la position de travail de chaque rampe soit déterminée par une butée.

De préférence, ladite butée sera prévue de sorte à permettre le réglage de l'horizontalité de ladite rampe.

Selon une caractéristique supplémentaire de l'invention, il pourra être prévu que la trémie s'étende au-dessus des roues.

Grâce à ces caractéristiques, le poids de la trémie agira au droit des roues. Lorsque la trémie sera en sus fixée sur le châssis avant, elle ne pivotera pas durant le travail autour de l'axe de l'articulation centrale, ce qui présente des avantages.

La trémie sera combinée avec un dispositif de dosage des graines, un dispositif de distribution des graines dosées et un dispositif de véhiculage des graines transportant celles-ci aux organes d'implantation.

Avantageusement, le dispositif de véhiculage des graines sera du type pneumatique.

Préférentiellement, le dispositif de distribution sera également du type pneumatique.

Selon une caractéristique supplémentaire de l'invention, chaque rampe à organes d'implantation pourra aussi être dotée d'un dispositif de recouvrement respectif destiné à égaliser la surface du sol et à recouvrir convenablement les graines disposées dans le sol.

Celui-ci pourra comporter au moins une poutre portant des doigts de recouvrement, cette (ces) poutre(s) pouvant être pivotée(s) autour d'une articulation respective d'axe au moins sensiblement parallèle à l'axe de la rampe respective pour pouvoir occuper une position active ou une position inactive.

D'autres objets et caractéristiques de l'invention ressortiront de la description ci-après, avec référence aux dessins annexés qui représentent, à titre d'exemples non limitatifs, deux formes de réalisation d'un semoir selon l'invention.

Sur ces dessins :
- La figure 1 représente une vue de côté d'un semoir selon une première forme de réalisation, celui-ci se trouvant dans la position de travail ;
- La figure 2 représente une vue de dessus du semoir de la figure 1 ;
- La figure 3 représente, à une échelle agrandie, une coupe selon le plan III-III de la figure 2 montrant les organes de verrouillage verrouillant le châssis arrière par rapport au châssis avant ;
- La figure 4 représente, à une échelle agrandie, une vue de côté des organes d'implantation du semoir de la figure 1 ;
- La figure 5 représente une vue de côté du semoir représenté sur la figure 1, se trouvant dans la position de transport ;
- La figure 6 représente une vue de dessus du semoir représenté sur la figure 1, se trouvant dans la position de transport ;
- La figure 7 représente une vue de côté d'un semoir selon une deuxième forme de réalisation, celui-ci se trouvant dans la position de transport.

Le semoir (1) comporte un timon d'attelage (3) et un corps (4). Ce timon d'attelage (3) est destiné à être lié, à son extrémité frontale, à un véhicule moteur (2) au moyen d'une articulation (5) du type rotule ou équivalent. A son extrémité arrière, le timon d'attelage (3) est lié au corps (4) à l'aide d'une articulation (6) présentant un axe au moins sensiblement horizontal et orthogonal à la direction de travail (7), de sorte à pouvoir être pivoté autour de l'articulation (6) sous l'action d'un organe de commande (8) implanté entre ledit timon d'attelage (3) et le corps (4). Cet organe de commande (8) sera décrit plus en détail ultérieurement.

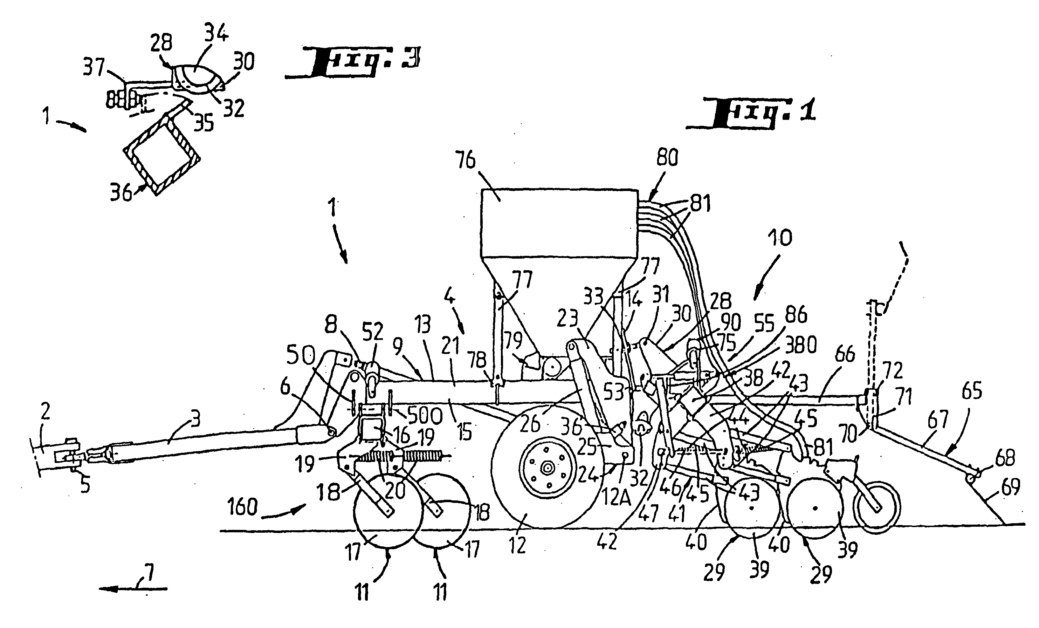

Le corps (4), quant à lui, comporte un châssis (9) et un dispositif de semis (10). Le châssis (9) supporte des outils ouvreurs (11) et s'appuie sur le sol au moyen de roues (12). Tel que visible sur les figures 1 à 6, le châssis (9) se compose d'un châssis avant (13) lié au timon d'attelage (3) et portant lesdits outils ouvreurs (11), et d'un châssis arrière (14).

Le châssis avant (13) comprend un bâti (15) auquel sont liées deux rampes (160) au moins sensiblement identiques et indépendantes, s'étendant chacune en position de travail au moins sensiblement horizontaliement et au moins sensiblement orthogonalement à la direction de travail (7). Chaque rampe (160) est composée principalement d'une poutre (16) qui porte les outils ouvreurs (11). Dans l'exemple représenté, les outils ouvreurs (11) sont des disques ouvreurs (17) chacun lié à un bras (18) qui est lui-même lié à la poutre (16) correspondante au moyen d'une console correspondante (19).

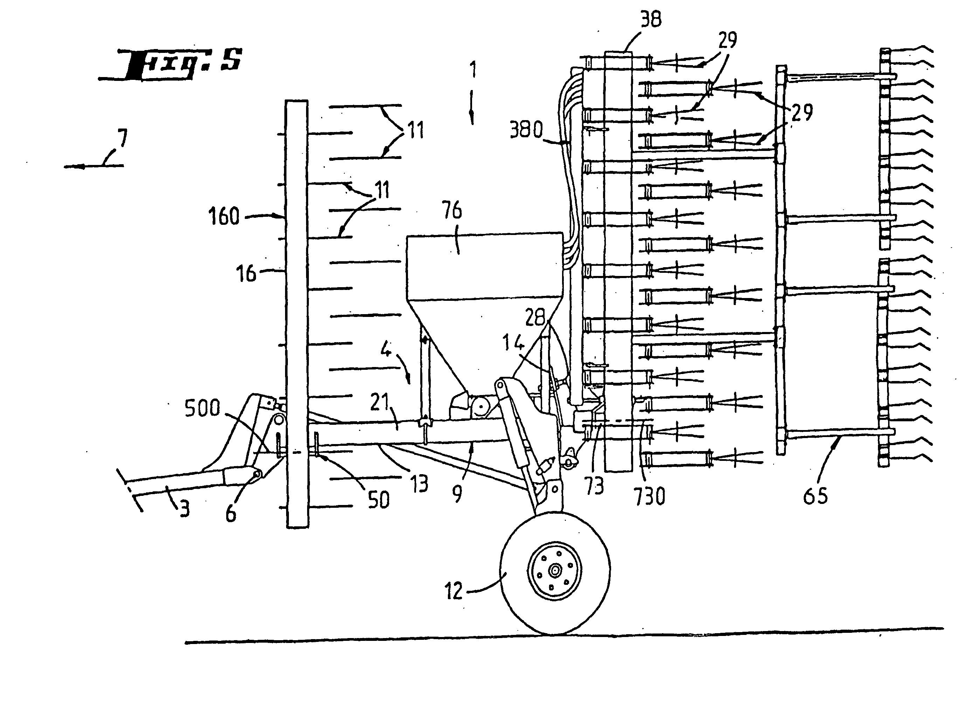

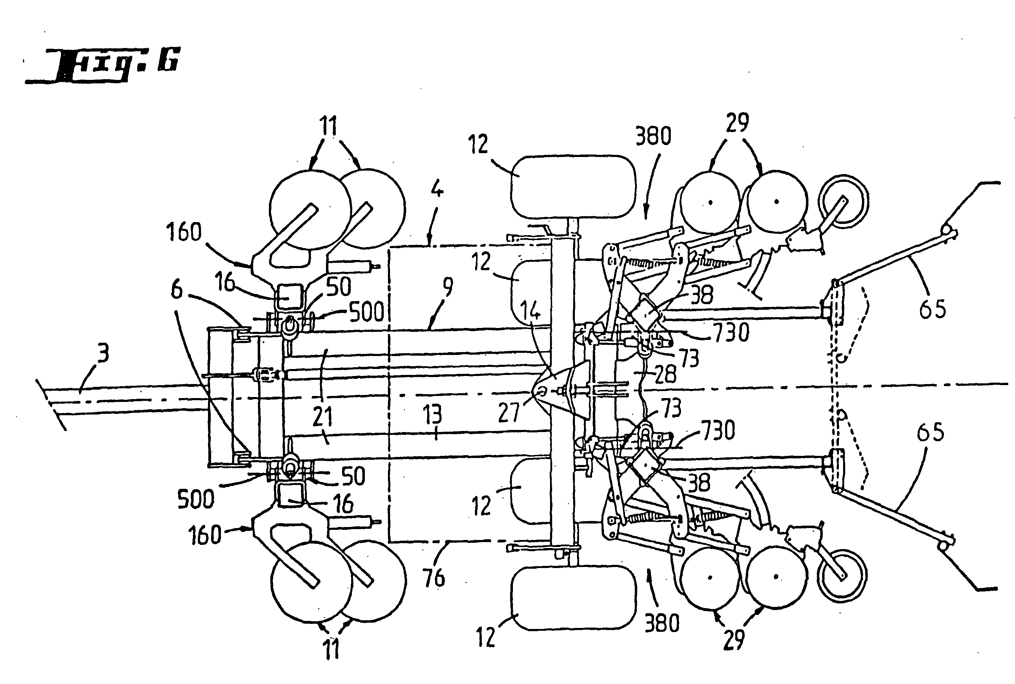

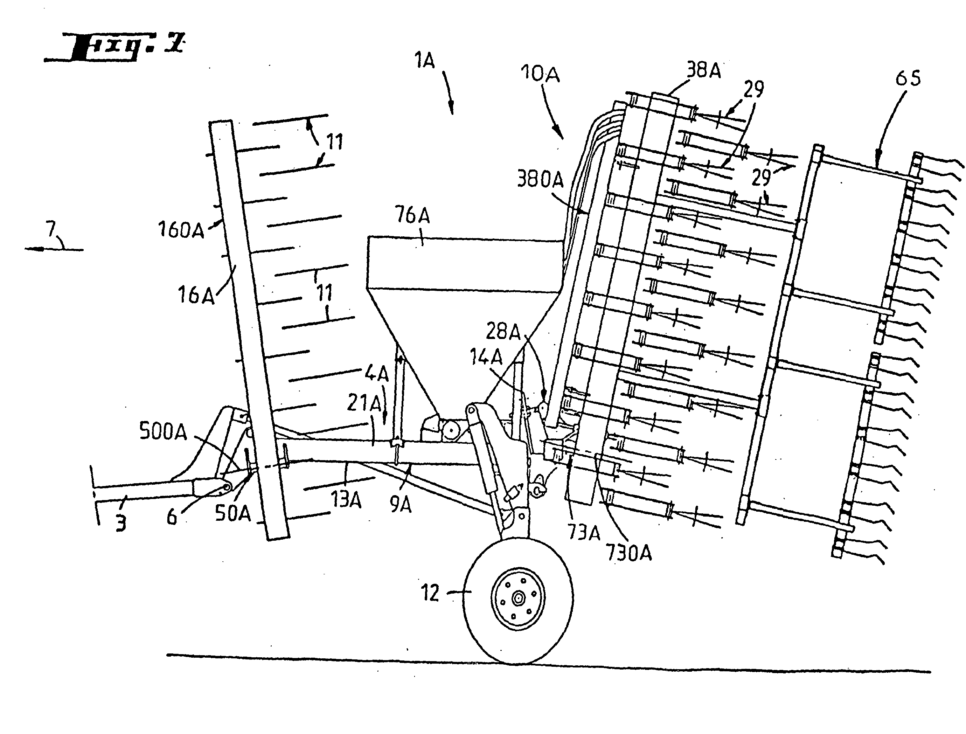

Par ailleurs, entre chaque bras (18) et la console (19) correspondante est implanté un ressort (20) tendant à faire pénétrer le disque ouvreur (17) respectif dans le sol. Les consoles (19) sont identiques entre elles et une console (19) sur deux est fixée à la poutre (16) correspondante dans un sens opposé au sens de travail (7) de sorte qu'un disque ouvreur (17) sur deux soit décalé suivant la direction de travail (7). Ces disques ouvreurs (17) ont pour fonction d'ouvrir des sillons dans le sol. Etant donné qu'à chaque disque ouvreur (17) est associé un ressort (20), chaque disque ouvreur (17) peut s'escamoter individuellement lorsqu'il rencontre un obstacle enfoui dans le sol. De plus, chaque console (19) est fixée à la poutre (16) correspondante par bridage de manière aisément amovible et de sorte que sa position puisse être facilement modifiée suivant l'axe longitudinal de ladite poutre (16). Un tel agencement permet de modifier aisément la distance séparant latéralement deux disques ouvreurs (17) adjacents et d'ajouter ou de retirer facilement des disques ouvreurs (17). Le bâti (15) du châssis avant (13) comporte deux poutres centrales (21) s'étendant, en vue de dessus, entre les roues (12) et aux extrémités frontales desquelles sont liées les poutres (16) au moyen d'une articulation (50) respective du type pivot d'axe longitudinal (500) s'étendant au moins sensiblement parallèlement à la direction de travail (7). En position de travail, les extrémités intérieures (51) adjacentes des deux poutres (16) s'étendent sous les deux poutres centrales (21) du châssis avant (13) et les deux disques ouvreurs (17) s'étendant auxdites extrémités intérieures (51) adjacentes des deux poutres (16) s'étendent sous les deux poutres centrales (21) du châssis avant (13) et les deux disques ouvreurs (17) s'étendant auxdites extrémités intérieures (51) adjacentes des deux poutres (16) sont positionnés au moins sensiblement comme deux disques ouvreurs (17) adjacents d'une même poutre (16). Les disques ouvreurs (17) couvrent ainsi, en position de travail, toute la largeur de travail du semoir (1). En position de transport (figure 6), lesdits disques ouvreurs (17) ne dépassent pas l'encombrement extérieur défini par les roues (12). A cet effet, chaque articulation (50) est située près de l'extrémité intérieure (51) de la poutre (16) respective et est implantée latéralement du côté extérieur de la poutre centrale (21) correspondante.

Le semoir (1) selon l'invention est également muni de moyens permettant le déplacement des rampes (160) d'une position de travail dans une position de transport et inversement, par pivotement autour des axes (500) des articulations (50). Ces moyens sont constitués, dans l'exemple représenté, de deux vérins hydrauliques (52) liés chacun, de manière articulée, à la poutre (16), respectivement à la poutre centrale (21) correspondante.

Les deux poutres centrales (21) du châssis avant (13) s'étendent vers l'arrière suivant la direction de travail (7). A leur extrémité arrière, les deux poutres centrales (21) sont fixées à une poutre arrière (22) du bâti (15) dirigée au moins sensiblement horizontalement et au moins sensiblement orthogonalement à la direction de travail (7). A chaque extrémité longitudinale de cette poutre arrière (22), le bâti (15) comporte en sus une paroi latérale (23) respective s'étendant dans un plan vertical.

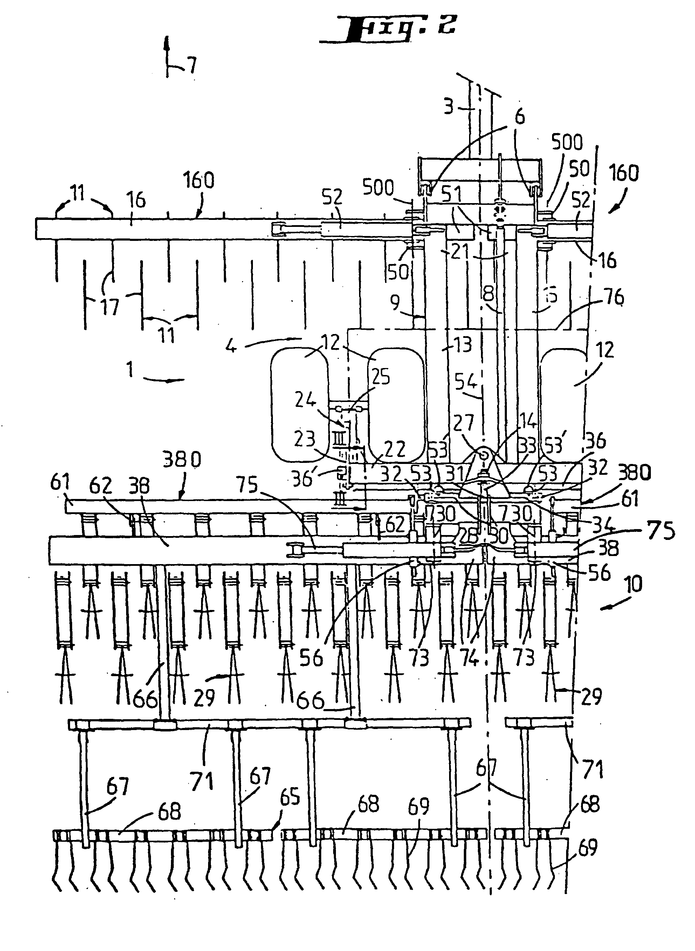

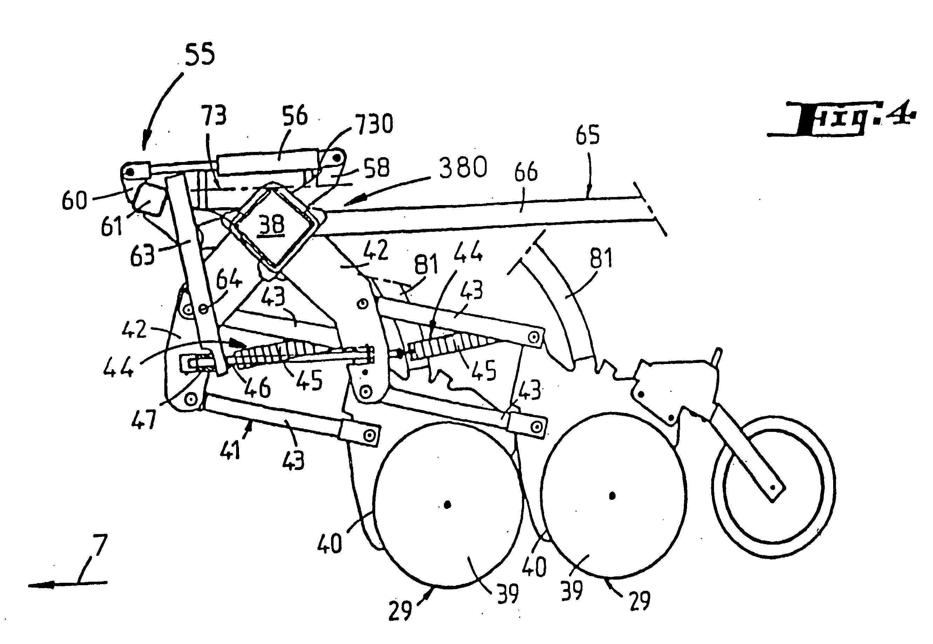

Au châssis avant (13) sont encore liées les roues (12) au moyen d'organes de liaison (24) autorisant le déplacement en hauteur desdites roues (12) par rapport audit châssis avant (13). Ces organes de liaison (24) comportent deux bras de roue (25) liés chacun à l'extrémité inférieure de la paroi latérale (23) respective du bâti (15) au moyen d'une articulation (12A) d'axe au moins sensiblement horizontal et au moins sensiblement orthogonal à la direction de travail (7). Entre chaque bras de roue (25) et l'extrémité supérieure de la paroi latérale (23) du bâti (15) est en sus implanté un vérin de manoeuvre (26) respectif. Les vérins de manoeuvre (26) permettent de déplacer le châssis avant (13) en hauteur et de le maintenir dans la position choisie. Avantageusement, une traverse (36) (figure 3) dont l'axe longitudinal est sensiblement confondu avec l'axe de l'articulation (42A), s'étend entre les deux bras de roue (25) auxquels elle est fixée. L'organe de commande (8) est articulé, à son extrémité arrière, sur cette traverse (36). Ainsi, en approchant le châssis avant (13) du sol, la traverse (36) tire, durant sa rotation, sur l'organe de commande (8) qui s'étend entre ladite traverse (36) et le timon d'attelage (3), lequel organe de commande (8) tend à pivoter le timon d'attelage (3) vers le haut autour de l'articulation (6). Mais, comme l'extrémité avant du timon d'attelage (3) est liée au véhicule moteur (2), il en résulte que l'extrémité arrière du timon d'attelage (3) appuie sur les poutres (16), ce qui fait pénétrer plus facilement les disques ouvreurs (17) dans le sol. Sur l'une au moins des parois latérales (23) du châssis avant (13) est en sus implantée une butée (36') de réglage de la profondeur de travail. Cette butée réglable (36') est destinée à limiter le pivotement du bras de roue (25) correspondant vers le haut en fonction de la profondeur de travail désirée.

Le châssis arrière (14), quant à lui, est lié à l'arrière du châssis avant (13) au moyen d'une articulation centrale (27) d'axe au moins sensiblement vertical. Au châssis arrière (14) est liée une structure porteuse (28) comportant, à sa partie frontale, une structure d'attelage (30) munie d'un point d'attelage supérieur (31) et de deux points d'attelage inférieurs (32). Pour lier la structure d'attelage (30) de la structure porteuse (28) au châssis arrière (14), ce dernier comporte un dispositif de réglage à vis et écrous (33) lié au point d'attelage supérieur (31) et une barre de guidage (34) dont les extrémités sont articulées dans les points d'attelage inférieurs (32) de la structure d'attelage (30). De ce fait, en agissant sur le dispositif de réglage à vis et écrous (33), la structure porteuse (28) peut être pivotée avec précision par rapport au châssis arrière (14) autour des deux points d'attelage inférieurs (32).

Par ailleurs, le pivotement du châssis arrière (14) et de la structure porteuse (28) par rapport au châssis avant (13) autour de l'axe de l'articulation centrale (27) est libre au travail et est limité par deux butées de débattement (53) situées au moins sensiblement symétriquement de part et d'autre du plan vertical (54) parallèle à la direction d'avance (7) et passant par l'axe de l'articulation centrale (27).

Chaque butée (53) est fixée sur la structure d'attelage (30) et est destinée à venir en appui sur la poutre arrière (22) du bâti (15) du châssis avant (13). Les deux butées (53) sont assistées par deux butées élastiques (53') également situées au moins sensiblement symétriquement de part et d'autre du plan vertical (54) entre les deux butées (53). Dans l'exemple représenté, l'angle de pivotement est d'environ 6° dans les deux sens.

Au transport, le pivotement du châssis arrière (14) et de la structure porteuse (28) par rapport au châssis avant (13) autour de l'axe de l'articulation centrale (27) est verrouillé automatiquement lors du relevage du châssis avant (13), donc du corps (4), à l'aide de moyens de verrouillage comportant des organes de verrouillage (35) et des butées (37). Ces organes de verrouillage (35) sont fixés sur la traverse (36) des bras de roue (25) et sont destinés à venir en contact avec les butées réglables (37) correspondantes fixées sur la barre de guidage (34), donc sur le châssis arrière (14), dans le voisinage des extrémités longitudinales de ladite barre de guidage (34). Ainsi, en allongeant les vérins de manoeuvre (26), c'est-à-dire en éloignant le corps (4) du sol, les bras de roue (25) et la traverse (36) pivotent autour de l'axe de l'articulation (12A). En fin de pivotement, les organes de verrouillage (35) viennent en contact avec les butées (37) fixées sur la barre de guidage (34), empêchant ainsi tout pivotement de ladite barre de guidage (34) et, de ce fait, du châssis arrière (14) et de la structure porteuse (28) autour de l'axe de 'articulation centrale (27). Grâce à cet agencement, la structure porteuse (28) ne peut donc pas pivoter au transport. Il convient du reste de noter que ces moyens de verrouillage (35, 37) libèrent automatiquement ce pivotement lors de la mise en position de travail. En approchant en effet le corps (4) du sol à l'aide des vérins de manoeuvre (26), la traverse (36) et les organes de verrouillage (35) qui y sont fixés, s'éloignent des butées (37).

La structure porteuse (28) comporte deux rampes (380) au moins sensiblement identiques et indépendantes, s'étendant chacune en position de travail au moins sensiblement horizontalement et au moins sensiblement orthogonalement à la direction de travail (7). Chaque rampe (380) est composée principalement d'un longeron (38) qui porte des organes d'implantation (29) de graines dans le sol. Dans l'exemple représenté, chaque organe d'implantation (29) comporte deux disques semeurs (39) placés en "V" ouvert vers l'arrière et un support (40) supportant les disques semeurs (39) de manière rotative. Chaque organe d'implantation (29) est lié au longeron (38) correspondant au moyen d'un dispositif de liaison (41) et d'une console (42). D'une manière similaire aux consoles (19) supportant les disques ouvreurs (17), une console (42) sur deux est fixée au longeron (38) dans un sens opposé au sens de travail (7), de sorte qu'un organe d'implantation (29) sur deux soit décalé suivant la direction de travail (7). De plus, les consoles (42) sont également identiques entre elles. Chaque console (42) est du reste également fixée au longeron (38) correspondant par bridage de manière aisément amovible et de sorte que sa position puisse être facilement modifiée suivant l'axe longitudinal dudit longeron (38). Un tel agencement permet de modifier aisément la distance séparant latéralement deux organes d'implantation (29) adjacents et d'ajouter ou de retirer facilement des organes d'implantation (29). Sur les figures 1 et 2, il apparaît aussi que chaque outil ouvreur (11) et son organe d'implantation (29) correspondant s'étendent au moins sensiblement dans le prolongement l'un de l'autre et, suivant la direction de travail (7), au moins sensiblement à la même distance de l'articulation centrale (27).

Grâce à un tel agencement, chaque organe d'implantation (29) se déplace toujours au moins sensiblement dans le sillon créé par l'outil ouvreur (11) correspondant, ceci en ligne droite et dans les virages. En outre, les roues (12) s'étendent entre les outils ouvreurs (11) et les organes d'implantation (29). De ce fait, les roues (12) ne roulent pas sur les bandes de terre déjà ensemencées à l'aide des organes d'implantation (29).

Comme dit précédemment, chaque organe d'implantation (29) est lié à la console (42) correspondante au moyen d'un dispositif de liaison (41) correspondant. Ce dispositif de liaison (41) comporte deux bielles (43) de sorte à former au moins sensiblement un parallélogramme déformable vers le haut. Ces bielles (43) sont implantées plus précisément entre le support (40) de l'organe d'implantation (29) et la console (42).

Compte tenu du fait que chaque organe d'implantation (29) peut se déplacer en hauteur au moyen d'un parallélogramme déformable, l'angle d'implantation des graines dans le sol reste constant quelle que soit la profondeur d'implantation ou lorsque les roues (12) passent sur un obstacle.

De plus, chaque dispositif de liaison (41) est muni d'un élément élastiquement déformable (44) tendant à conserver l'organe d'implantation (29) au fond du sillon. Dans l'exemple décrit, chaque élément étastiquement déformable (44) est un ressort de traction (45) implanté au moins sensiblement parallèlement à la direction de travail (7). De ce fait, quelle que soit la position en hauteur de l'organe d'implantation (29), l'action du ressort de traction (45) agissant sur le parallélogramme déformable est au moins sensiblement constante. Chaque ressort de traction (45) est en outre implanté dans le parallélogramme correspondant et lié, par l'intermédiaire d'un tirant (46), à une barre centrale de réglage (47). On comprendra bien évidemment que chaque rampe (380) est dotée de sa propre barre centrale de réglage (47) qui s'étend au moins sensiblement parallèlement au longeron (38) correspondant. Un ressort de traction (45) d'un organe d'implantation (29) arrière est lié à la barre centrale de réglage (47) au moyen d'un tirant (46) long, tandis qu'un ressort de traction (45) d'un organe d'implantation (29) avant est lié à ladite barre centrale de réglage (47) au moyen d'un tirant (46) court. Chaque barre centrale de réglage (47) est guidée en translation dans les consoles (42) avant correspondantes et un mécanisme de réglage (55) puermet de translater ladite barre centrale de réglage (47) vers l'avant ou vers l'arrière. Ce mécanisme de réglage (55) est essentiellement situé devant le longeron (38) correspondant de manière à réduire au maximum le porte-à-faux du châssis arrière (14) et des divers organes qu'il porte, par rapport aux roues (12). Du reste, on peut également constater que chaque tirant (46) long est guidé dans la console (42) arrière correspondante.

Ce mécanisme de réglage (55) est bien visible sur la figure 4. Il comporte notamment au moins un élément de manoeuvre qui, dans l'exemple représenté, est avantageusement constitué d'un vérin hydraulique (56) permettant de tarer à distance, l'effort exercé par chaque élément élastiquement déformable (44) sur l'organe d'implantation (29) correspondant.

Ce vérin hydraulique (56) est implanté au-dessus du longeron (38) correspondant et s'étend au moins sensiblement suivant la direction de travail (7). Il est articulé d'une part à un bras (58) fixé sur le longeron (38), et d'autre part à un bras (60) fixé sur une poutre de réglage (61) elle-même liée au longeron (38) correspondant par l'intermédiaire d'une articulation (62) (figure 2) d'axe dirigé au moins sensiblement parallèlement à l'axe longitudinal dudit longeron (38). Cette poutre de réglage (61) agit sur la barre centrale de réglage (47) correspondante par l'intermédiaire d'au moins un levier pivotant (63) lié, dans l'exemple représenté, à une console (42) au moyen d'une articulation (64) d'axe au moins sensiblement parallèle à l'axe de l'articulation (62) liant la poutre de réglage (61) au longeron (38).

En rétrécissant le vérin hydraulique (56), on déplace ainsi la barre centrale de réglage (47) vers l'avant, ce qui a pour effet d'augmenter la tension des ressorts de traction (45). Inversement, en relâchant la pression dans le vérin hydraulique (56), la tension des ressorts de traction (45) diminue.

Chaque rampe (380) est également dotée d'un dispositif de recouvrement (65) destiné à égaliser la surface du sol et à recouvrir convenablement les graines implantées dans la terre. A cet effet, ce dispositif de recouvrement (65) comporte au moins un support (66) lié au longeron (38), et des bras (67) portant à leurs extrémités arrière au moins une poutre (68) s'étendant au moins sensiblement orthogonalement à la direction de travail (7) et munie de doigts de recouvrement (69). Lesdits bras (67) sont liés, au moyen d'une articulation (70), à un élément de liaison (71) correspondant fixé au(x) support(s) (66). Grâce à ces bras (67) articulés, la (les) poutre(s) (68) munie(s) des doigts de recouvrement (69) peut (peuvent) être amenée(s) dans une position active (traits forts) et dans une position inactive (traits interrompus). Un dispositif de verrouillage (72) permet de verrouiller les bras (67) dans la position inactive.

Chaque longeron (38) est lié à la structure porteuse (28) d'une manière semblable à celle liant chaque poutre (16) aux poutres centrales (21) du châssis avant (13), c'est-à-dire au moyen d'une articulation (73) respective, du type pivot d'axe longitudinal (730) s'étendant au moins sensiblement parallèlement à la direction de travail (7). En position de travail, les extrémités intérieures (74) adjacentes des deux longerons (38) s'étendent sous la structure porteuse (28) et les deux organes d'implantation (29) s'étendant auxdites extrémités intérieures (74) adjacentes des deux longerons (38) sont positionnés au moins sensiblement comme deux organes d'implantation (29) adjacents d'un même longeron (38). Les organes d'implantation (29) couvrent ainsi, en position de travail, toute la largeur de travail du semoir (1). En position de transport (figure 6), lesdits organes d'implantation (29) ne dépassent pas l'encombrement extérieur défini par les roues (12). A cet effet, chaque articulation (73) est située près de l'extrémité intérieure (74) du longeron (38) respectif, c'est-à-dire près du plan vertical (54), et est implantée au moins sensiblement dans le prolongement des poutres centrales (21) du châssis avant (13). Ces articulations (73) s'étendent en outre au moins sensiblement symétriquement par rapport au plan vertical médian (54), tout comme les articulations (50) liant au châssis avant (13) les poutres (16) portant les disques ouvreurs (17).

Tout comme les rampes (160), les rampes (380) peuvent également être pivotées autour des axes (730) des articulations (73) correspondantes d'une position de travail dans une position de transport et inversement à l'aide de moyens adéquats. Ces moyens sont constitués, dans l'exemple représenté, de deux vérins hydrauliques (75) liés chacun, de manière articulée, au longeron (38) correspondant, respectivement à la structure porteuse (28).

Les vérins hydrauliques (52, 75), destinés à déplacer les rampes (160, 380) correspondantes autour de l'axe (500, 730) des articulations (50, 73) respectives, sont branchés en parallèle (branchement non représenté) et alimentés depuis une source hydraulique (non représentée) telle que la centrale hydraulique du véhicule moteur (2) par exemple. Dans ce dernier cas, les quatre rampes (160, 380) peuvent être manoeuvrées au moyen d'un seul distributeur (non représenté) équipant ledit véhicule moteur (2).

Le dispositif de semis (10) comporte également une trémie (76) s'étendant entre les outils ouvreurs (11) et les organes d'implantation (29), et au moins sensiblement au-dessus des roues (12). Cette trémie (76) est fixée sur les poutres centrales (21) du bâti (15) du châssis avant (13) au moyen d'une structure de maintien (77) liée aux poutres centrales (21) au moyen d'éléments de bridage (78). Les graines contenues dans la trémie (76) sont dosées par un dispositif (79) de dosage, puis distribuées par un dispositif de distribution (non représenté, mais connu) et enfin véhiculées jusqu'aux disques semeurs (39) des organes d'implantation (29) par un dispositif (80) de véhiculage comprenant notamment des tuyaux flexibles (81) raccordés chacun à un organe d'implantation (29) respectif.

Le dispositif (80) de véhiculage ainsi qu'éventuellement le dispositif de distribution seront avantageusement du type pneumatique, ce qui présente des avantages à plusieurs égards.

La figure 7 représente un semoir (1A) selon une deuxième forme de réalisation. Ce semoir (1A) comporte un certain nombre d'organes identiques aux organes respectifs du semoir (1) décrit précédemment. Ces organes seront ainsi affectés du même numéro de repère et ne seront pas redécrits.

Le semoir (1 A) comporte également un certain nombre d'organes qui sont comparables à des organes dudit semoir (1). Ceux-ci seront affectés du même numéro de repère que ces organes comparables suivi de la lettre A. Ils ne seront redécrits que si cela s'avérait nécessaire.

La différence entre le semoir (1A) selon cette deuxième forme de réalisation et le semoir (1) selon la forme de réalisation précédente réside essentiellement dans l'orientation des axes (500A, 730A) des articulations (50A, 73A) liant les rampes (160A) à outils ouvreurs (11) au châssis avant (13A), respectivement les rampes (380A) à organes d'implantation (29) à la structure porteuse (28A).

En effet, l'axe (500A) de chaque articulation (50A) liant une rampe (160A) à outils ouvreurs (11) à la poutre centrale (21 A) correspondante du châssis avant (13A) s'étend, en vue de côté, vers l'avant et quelque peu vers le bas et, en vue de dessus, au moins sensiblement parallèlement à la direction de travail (7).

L'axe (730A) de chaque articulation (73A) liant une rampe (380A) à organes d'implantation (29) à la structure porteuse (28A) s'étend, quant à lui, en vue de côté, vers l'avant et quelque peu vers le haut et, en vue de dessus, au moins sensiblement parallèlement à la direction de travail (7).

Bien évidemment, les poutres (16A), les longerons (38A) et/ou les consoles des outils ouvreurs (11), respectivement les consoles des organes d'implantation (29) ont une forme adaptée en fonction de l'inclinaison des axes (500A, 730A) des articulations (50A, 73A) de sorte que les outils ouvreurs (11) et les organes d'implantation (29) soient positionnés, durant le travail, de manière au moins sensiblement identique à ceux du semoir (1) de l'exemple précédent.

Grâce à cet agencement, l'espace entre les rampes (160A) à outils ouvreurs (11) et les rampes (380A) à organes d'implantation (29), lorsque celles-ci sont pivotées vers le haut en position de transport (figure 7), est plus important et permet par conséquent d'y loger une trémie (76A) d'un volume plus grand.

On comprendra, bien évidemment, que le semoir (1 A) selon cette deuxième forme de réalisation est également muni de vérins hydrauliques (52, 75) destinés à pivoter les rampes (160A, 380A) dans leur position de transport respective.

Le semoir (1 ; 1A) est également pourvu d'un dispositif (non représenté) permettant de verrouiller mécaniquement les rampes (160, 380; 160A, 380A) lorsque celles-ci sont en position de transport. Préférentiellement, le verrouillage et éventuellement le déverrouillage se feront de manière automatique.

Le semoir (1 ; 1A) selon l'invention fonctionne de la manière suivante.

Au transport, les quatre rampes (160, 380 ; 160A, 380A) sont maintenues dans la position représentée sur les figures 5 à 7 par les vérins hydrauliques (52, 75) et verrouillées mécaniquement par le dispositif de verrouillage (non représenté) évoqué précédemment. Les roues (12) sont maintenues en position abaissée par les vérins de manoeuvre (26), le châssis avant (13 ; 13A) est au moins sensiblement parallèle au sol grâce à l'organe de commande (8) et les moyens de verrouillage (35, 37) maintiennent solidement la structure porteuse (28 ; 28A) et les rampes (380 ; 380A) à organes d'implantation (29) dans leur position médiane, évitant ainsi tout pivotement autour de l'axe de l'articulation centrale (27). Il convient de rappeler que la condamnation dudit pivotement autour de l'axe de l'articulation centrale (27) se fait automatiquement lors du relevage du corps (4 ; 4A). Pour transposer le semoir (1 ; 1A) de la position de transport dans la position de travail, on neutralise tout d'abord le dispositif de verrouillage (non représenté) verrouillant les rampes (160, 380 ; 160A, 380A) dans leur position de transport, puis on alimente les quatre vérins hydrauliques (52, 75) au moyen de la source hydraulique prévue à cet effet (la centrale hydraulique du véhicule moteur (2) par exemple). Les quatre rampes (160, 380 ; 160A, 380A) pivotent alors vers le bas autour des axes (500, 730 ; 500A, 730A) des articulations (50, 73 ; 50A, 73A) respectives jusqu'à s'étendre au moins sensiblement horizontalement et au moins sensiblement orthogonalement à la direction de travail (7). On agit enfin sur les deux vérins de manoeuvre (26) pour approcher le corps (4; 4A) du sol. Ce faisant, les roues (12) pivotent autour des axes des articulations (12A) liant les bras de roue (25) au châssis avant (13 ; 13A). La position basse du corps (4 ; 4A) est atteinte lorsque le bras de roue (25) adéquat arrive en contact avec la butée réglable (36') prévue à cet effet. Il convient de noter que le circuit hydraulique permettant d'alimenter les vérins hydrauliques (52, 75) des rampes (160, 380 ; 160A, 380A) et le circuit hydraulique permettant d'alimenter les vérins de manoeuvre (26) sont totalement indépendants.

Au travail, les rampes (160 ; 160A) à outils ouvreurs (11) et les rampes (380 ; 380A) à organes d'implantation (29) des graines dans le sol se trouvent dans la position représentée sur les figures 1 et 2. Lesdites rampes (160, 380 ; 160A, 380A) sont maintenues de manière rigide par rapport au châssis avant (13 ; 13A), respectivement par rapport à la structure porteuse (28 ; 28A) du châssis arrière (14 ; 14A) par les vérins hydrauliques (52, 75). L'adaptation au sol des outils ouvreurs (11), respectivement des organes d'implantation (29) se fait au moyen des bras (18), respectivement des dispositifs de liaison (41) à parallélogramme déformable.

Les mouvements en bout de parcelle s'effectuent simplement en soulevant le corps (4 ; 4A) à l'aide des vérins de manoeuvre (26). On éloigne ainsi les outils ouvreurs (11) et les organes d'implantation (29) du sol.

Pour mettre le semoir (1 ; 1A) en position de transport, il suffira de soulever le corps (4 ; 4A) à l'aide des vérins de manoeuvre (26), puis de relever les rampes (160 ; 160A) à outils ouvreurs (11), respectivement des rampes (380 ; 380A) à organes d'implantation (29) au moyen des vérins hydrauliques (52), respectivement (75). On pourra ensuite replier les dispositifs de recouvrement (65) dans leur position inactive (figure 6) pour diminuer quelque peu la longueur du semoir (1 ; 1A) durant le transport.

Différentes modifications restent possibles, notamment en ce qui concerne la constitution des divers éléments ou par substitution d'équivalents techniques, sans pour autant sortir du domaine de protection défini par les revendications.

Ainsi, on peut parfaitement réaliser un semoir (1 ; 1A) équipé de plus de deux rampes (160, 380 ; 160A, 380A) par châssis (9 ; 9A) : par exemple trois rampes (160, 380 ; 160A, 380A) dont la rampe médiane serait fixée rigidement audit châssis (9 ; 9A) tandis que les rampes latérales seraient liées audit châssis (9 ; 9A) comme expliqué précédemment.

Il est également parfaitement possible de prévoir des butées réglables destinées à régler l'horizontalité des différentes rampes (160, 380 ; 160A, 380A) en position de travail.

Il est également possible d'équiper chaque paire de rampes (160, 380 ; 160A, 380A) d'un seul vérin hydraulique (52, 75) destiné à pivoter celles-ci d'une position de transport dans une position de travail ou inversement.

Il est aussi parfaitement possible que les vérins hydrauliques (52, 75) soient alimentés de manière indéperidante ou que les vérins (52, 75) d'une rampe (160; 160A) à outils ouvreurs (11) et de la rampe (380 ; 380A) à organes d'implantation (29) correspondante soient alimentés simultanément. Il est ainsi possible de relever individuellement chaque telle paire de rampes ce qui permet avantageusement d'esquiver d'éventuels obstacles ou de travailler à largeur réduite lors du semis en fin de parcelle.

## Revendications

1. Semoir (1 ; 1A) comportant :
- un timon d'attelage (3) destiné à être lié à son extrémité frontale à un véhicule moteur (2) au moyen d'une articulation (5),
et
- un corps (4 ; 4A) comportant
* un châssis (9 ; 9A) composé :
• d'un châssis avant (13 ; 13A) lié audit timon d'attelage (3), portant des outils ouvreurs (11) et s'appuyant sur le sol au moyen de roues (12) qui y sont liées de manière déplaçable en hauteur au moyen d'organes de liaison (24) et
• d'un châssis arrière (14 ; 14A) lié au châssis avant (13 ; 13A) au moyen d'une articulation centrale (27) d'axe longitudinal au moins sensiblement vertical,
et
* un dispositif de semis (10 ; 10A) comportant entre autre une trémie (76 ; 76A) et des organes d'implantation (29) de graines dans le sol, ces derniers étant portés par le châssis arrière (14 ; 14A)
**caractérisé en ce :**
- **que** les outils ouvreurs (11) sont liés à au moins deux rampes (160 ; 160A) indépendantes l'une de l'autre, liées chacune au châssis avant (13 ; 13A) au moyen d'une articulation (50 ; 50A) respective d'axe (500 ; 500A) dirigé vers l'avant,
- **que** les organes d'implantation (29) de graines dans le sol sont liés à au moins deux rampes (380 ; 380A) indépendantes l'une de l'autre, liées chacune au châssis arrière (14 ; 14A) au moyen d'une articulation (73 ; 73A) respective d'axe (730 ; 730A) dirigé vers l'avant,
- **qu'**il est prévu au moins un moyen (52, 75) permettant le pivotement desdites rampes (160, 380 ; 160A, 380A) autour de l'axe (500, 730 ; 500A, 730A) de leur articulation (50, 73 ; 50A, 73A) respective d'une position de travail où lesdites rampes (160, 380 ; 160A, 380A) s'étendent au moins sensiblement horizontalement et transversalement à la direction de travail (7) dans une position de transport où elles s'étendent vers le haut, respectivement de ladite position de transport dans ladite position de travail,
et
- **que** la trémie (76 ; 76A) fixée sur le châssis avant (13 ; 13A) s'étend entre les outils ouvreurs (11) et les organes d'implantation (29).

2. Semoir selon la revendication 1, **caractérisé en ce que** l'axe (500) d'une articulation (50) liant une rampe (160) à outils ouvreurs (11) au châssis avant (13) est au moins sensiblement parallèle à la direction de travail (7).

3. Semoir selon la revendication 1, **caractérisé en ce que** l'axe (500A) d'une articulation (50A) liant une rampe (160A) à outils ouvreurs (11) au châssis avant (13A) est dirigé, en vue de côté, vers l'avant et quelque peu vers le bas, et, en vue de dessus, au moins sensiblement parallèlement à la direction de travail (7).

4. Semoir selon la revendication 1, 2 ou 3, **caractérisé en ce que** l'axe (730) d'une articulation (73) liant une rampe (380) à organes d'implantation (29) au châssis arrière (14) est au moins sensiblement parallèle à la direction de travail (7).

5. Semoir selon la revendication 1, 2 ou 3, **caractérisé en ce que** l'axe (730A) d'une articulation (73A) liant une rampe (380A) à organes d'implantation (29) au châssis arrière (14A) est dirigé, en vue de côté, vers l'avant et quelque peu vers le haut, et, en vue de dessus, au moins sensiblement parallèlement à la direction de travail (7).

6. Semoir selon l'une quelconque des revendications 1 à 5, **caractérisé en ce que** les articulations (50 ; 50A) liant les rampes (160 ; 160A) à outils ouvreurs (11) au châssis avant (13 ; 13A), respectivement les articulations (73 ; 73A) liant les rampes (380 ; 380A) à organes d'implantation (29) au châssis arrière (14 ; 14A) s'étendent au moins sensiblement symétriquement par rapport au plan vertical (54) passant par l'articulation centrale (27) et dirigé suivant la direction de travail (7).

7. Semoir selon l'une quelconque des revendications 1 à 6, **caractérisé en ce qu'**une articulation (50 ; 50A) liant une rampe (160 ; 160A) à outils ouvreurs (11) au châssis avant (13 ; 13A), respectivement une articulation (73 ; 73A) liant une rampe (380 ; 380A) à organes d'implantation (29) au châssis arrière (14 ; 14A) est implantée dans le voisinage de l'extrémité intérieure (51) de ladite rampe (160 ; 160A) à outils ouvreurs (11), respectivement dans le voisinage de l'extrémité intérieure (74) de ladite rampe (380 ; 380A) à organes d'implantation (29).

8. Semoir selon l'une quelconque des revendications 1 à 7, **caractérisé en ce qu'**en position de travail, les deux outils ouvreurs (11) s'étendant aux extrémités intérieures (51) adjacentes des deux rampes (160 ; 160A) sont positionnés au moins sensiblement comme deux outils ouvreurs (11) adjacents d'une même rampe (160 ; 160A).

9. Semoir selon l'une quelconque des revendications 1 à 8, **caractérisé en ce qu'**en position de travail, les deux organes d'implantation (29) s'étendant aux extrémités intérieures (74) adjacentes des deux rampes (380 ; 380A) sont positionnés au moins sensiblement comme deux organes d'implantation (29) adjacents d'une même rampe (380 ; 380A).

10. Semoir selon l'une quelconque des revendications 1 à 9, **caractérisé en ce qu'**en position de travail, les rampes (160 ; 160A) à outils ouvreurs (11) et les rampes (380 ; 380A) à organes d'implantation (29) s'étendent au moins sensiblement orthogonalement à la direction de travail (7).

11. Semoir selon l'une quelconque des revendications 1 à 10, **caractérisé en ce que** chaque organe d'implantation (29) s'étend, en vue de dessus et suivant la direction de travail (7), au moins sensiblement à la même distance de l'articulation centrale (27) que l'outil ouvreur (11) correspondant.

12. Semoir selon l'une quelconque des revendications 1 à 11, **caractérisé en ce qu'**à chaque rampe (160, 380 ; 160A, 380A) est associé un moyen (52, 75) permettant son pivotement autour de l'axe (500, 730 ; 500A, 730A) de son articulation (50, 73 ; 50A, 73A) respective.

13. Semoir selon la revendication 12, **caractérisé en ce qu'**une rampe (160; 160A) à organes ouvreurs (11) et la rampe (380 ; 380A) à organes d'implantation (29) correspondante peuvent être pivotées en position de transport indépendamment des autres rampes (160, 380 ; 160A, 380A).

14. Semoir selon l'une quelconque des revendications 1 à 11, **caractérisé en ce qu'**à chaque paire de rampes (160 ; 160A) à outils ouvreurs (11), respectivement à chaque paire de rampes (380 ; 380A) à organes d'implantation (29) est associé un moyen commun (52, 75) permettant leur pivotement autour de l'axe (500, 730 ; 500A, 730A) de leur articulation (50, 73 ; 50A, 73A) respective.

15. Semoir selon l'une quelconque des revendications 1 à 14, **caractérisé en ce que** le (les) moyen(s) (52, 75) permettant le pivotement des rampes (160, 380 ; 160A, 380A) autour de l'axe (500, 730 ; 500A, 730A) de leur articulation (50, 73 ; 50A, 73A) respective comporte(nt) un (des) vérin(s) hydraulique(s) (52, 75).

16. Semoir selon l'une quelconque des revendications 1 à 15, **caractérisé en ce que** chaque rampe (160, 380 ; 160A, 380A) est verrouillée en position de transport par un dispositif de verrouillage mécanique correspondant.

17. Semoir selon l'une quelconque des revendications 1 à 16, **caractérisé en ce que** la position de travail de chaque rampe (160, 380 ; 160A, 380A) est déterminée par une butée.

18. Semoir selon la revendication 17, **caractérisé en ce que** ladite butée permet de régler l'horizontalité de ladite rampe (160, 380 ; 160A, 380A).

19. Semoir seion l'une quelconque des revendications 1 à 18, **caractérisé en ce que** la trémie (76 ; 76A) s'étend au-dessus des roues (12).

20. Semoir selon l'une quelconque des revendications 1 à 19, **caractérisé en ce que** la trémie (76 ; 76A) est fixée sur le châssis avant (13 ; 13A).

21. Semoir selon l'une quelconque des revendications 1 à 20, **caractérisé en ce que** la trémie (76 ; 76A) est combinée avec un dispositif (79) de dosage des graines, un dispositif de distribution des graines dosées et un dispositif (80) de véhiculage des graines transportant les graines aux organes d'implantation (29).

22. Semoir selon la revendication 21, **caractérisé en ce que** le dispositif (80) de véhiculage des graines est du type pneumatique.

23. Semoir selon la revendication 22, **caractérisé en ce que** le dispositif de distribution est également du type pneumatique.

24. Semoir selon l'une quelconque des revendications 1 à 23, **caractérisé en ce que** chaque rampe (380 ; 380A) à organes d'implantation (29) est dotée d'un dispositif de recouvrement (65) respectif.

25. Semoir selon la revendication 24, **caractérisé en ce que** chaque dispositif de recouvrement (65) comporte au moins une poutre (68) portant des doigts de recouvrement (69), cette (ces) poutre(s) (68) pouvant être pivotée(s) autour d'une articulation (70) respective d'axe au moins sensiblement parallèle à l'axe de la rampe (380 ; 380A) respective.

## Patentansprüche

1. Sämaschine (1; 1A), die
- eine Kupplungsdeichsel (3), die mit ihrem vorderen Ende mittels eines Gelenks (5) mit einem Motorfahrzeug (2) verbunden werden soll,
- einen Körper (4; 4A), der
* ein Gestell (9; 9A), das aus
- einem mit der Kupplungsdeichsel (3) verbundenen vorderen Gestell (13; 13A), das Öffnungswerkzeuge (11) trägt und sich mittels Rädern (12), welche mittels Verbindungselementen (24) in der Höhe verschiebbar damit verbunden sind, auf den Boden stützt, und
- einem hinteren Gestell (14; 14A), das mittels eines mittleren Gelenks (27) mit einer zumindest im wesentlichen vertikalen Achse mit dem vorderen Gestell (13; 13A) verbunden ist, besteht,
und
* eine Sävorrichtung (10; 10A), die unter anderem einen Trichter (76; 76A) und Elemente (29) zum Ablegen von Samen in den Boden aufweist, wobei diese Elemente von dem hinteren Gestell (14; 14A) getragen werden, umfaßt;
***dadurch gekennzeichnet,***
- **daß** die Öffnungswerkzeuge (11) mit mindestens zwei voneinander unabhängigen Rampen (160; 160A) verbunden sind, die jeweils mittels eines jeweiligen Gelenks (50; 50A) mit nach vorne ausgerichteter Achse (500; 500A) mit dem vorderen Gestell (13; 13A) verbunden sind,
- **daß** die Elemente (29) zum Ablegen von Samen in den Boden mit mindestens zwei voneinander unabhängigen Rampen (380; 380A) verbunden sind, welche jeweils mittels eines jeweiligen Gelenks (73; 73A) mit nach vorne ausgerichteter Achse (730; 730A) mit dem hinteren Gestell (14; 14A) verbunden sind,
- **daß** mindestens ein Mittel (52, 75) vorgesehen ist, das das Schwenken der Rampen (160, 380; 160A, 380A) um die Achse (500, 730; 500A, 730A) ihres jeweiligen Gelenks (50, 73; 50A, 73A) aus einer Arbeitsstellung, in der sich die Rampen (160, 380; 160A, 380A) zumindest im wesentlichen horizontal und quer zur Arbeitsrichtung (7) erstrecken, in eine Transportstellung, in der sie sich nach oben erstrecken, bzw. aus der Transportstellung in die Arbeitsstellung, gestattet,
und
- **daß** der Trichter (76; 76A) der an dem vorderen Gestell (13 ; 13A) befestigt ist, sich zwischen den Öffnungswerkzeugen (11) und den Ablegeelementen (29) erstreckt.

2. Sämaschine nach Anspruch 1, ***dadurch gekennzeichnet,* daß** die Achse (500) eines eine Rampe (160) mit Öffnungswerkzeugen (11) mit dem vorderen Gestell (13) verbindenden Gelenks (50) zumindest im wesentlichen parallel zur Arbeitsrichtung (7) verläuft.

3. Sämaschine nach Anspruch 1, ***dadurch gekennzeichnet,* daß** die Achse (500A) eines eine Rampe (160A) mit Öffnungswerkzeugen (11) mit dem vorderen Gestell (13A) verbindenden Gelenks (50A) in Seitenansicht nach vorne und etwas nach unten ausgerichtet ist und in Draufsicht zumindest im wesentlichen parallel zur Arbeitsrichtung (7) verläuft.

4. Sämaschine nach Anspruch 1, 2 oder 3, ***dadurch gekennzeichnet,* daß** die Achse (730) eines eine Rampe (380) mit Ablegeelementen (29) mit dem hinteren Gestell (14) verbindenden Gelenks (73) zumindest im wesentlichen parallel zur Arbeitsrichtung (7) verläuft.

5. Sämaschine nach Anspruch 1, 2 oder 3, ***dadurch gekennzeichnet,* daß** die Achse (730A) eines eine Rampe (380A) mit Ablegeelementen (29) mit dem hinteren Gestell (14A) verbindenden Gelenks (73A) in Seitenansicht nach vorne und etwas nach oben ausgerichtet ist und in Draufsicht zumindest im wesentlichen parallel zur Arbeitsrichtung (7) verläuft.

6. Sämaschine nach einem der Ansprüche 1 bis 5, ***dadurch gekennzeichnet,* daß** sich die die Rampen (160; 160A) mit Öffnungswerkzeugen (11) mit dem vorderen Gestell (13; 13A) verbindenden Gelenke (50; 50A) bzw. die die Rampen (380; 380A) mit Ablegeelementen (29) mit dem hinteren Gestell (14; 14A) verbindenden Gelenke (73, 73A) zumindest im wesentlichen symmetrisch bezüglich der durch das mittlere Gelenk (27) verlaufenden und in Arbeitsrichtung (7) ausgerichteten vertikalen Ebene (54) erstrecken.

7. Sämaschine nach irgend einem der Ansprüche 1 bis 6, ***dadurch gekennzeichnet,* daß** ein eine Rampe (160; 160A) mit Öffnungswerkzeugen (11) mit dem vorderen Gestell (13; 13A) verbindendes Gelenk (50; 50A) bzw. ein eine Rampe (380; 380A) mit Ablegeelementen (29) mit dem hinteren Gestell (14; 14A) verbindendes Gelenk (73; 73A) in der Nähe des inneren Endes (51) der Rampe (160; 160A) mit Öffnungswerkzeugen (11) bzw. in der Nähe des inneren Endes (74) der Rampe (380; 380A) mit Ablegeelementen (29) angebracht ist.

8. Sämaschine nach irgend einem der Ansprüche 1 bis 7, ***dadurch gekennzeichnet,* daß** die beiden sich an den benachbarten inneren Enden (51) der beiden Rampen (160; 160A) erstreckenden Öffnungswerkzeuge (11) in Arbeitsstellung zumindest im wesentlichen wie zwei benachbarte Öffnungswerkzeuge (11) der gleichen Rampe (160; 160A) positioniert sind.

9. Sämaschine nach irgend einem der Ansprüche 1 bis 8, ***dadurch gekennzeichnet,* daß** die beiden sich an den benachbarten inneren Enden (74) der beiden Rampen (380; 380A) erstreckenden Ablegeelemente (29) in Arbeitsstellung zumindest im wesentlichen wie zwei benachbarte Ablegeelemente (29) der gleichen Rampe (380; 380A) positioniert sind.

10. Sämaschine nach irgend einem der Ansprüche 1 bis 9, ***dadurch gekennzeichnet,* daß** sich die Rampen (160; 160A) mit Öffnungswerkzeugen (11) und die Rampen (380; 380A) mit Ablegeelementen (29) in Arbeitsstellung zumindest im wesentlichen senkrecht zur Arbeitsrichtung (7) erstrecken.

11. Sämaschine nach irgend einem der Ansprüche 1 bis 10, ***dadurch gekennzeichnet,* daß** sich jedes Ablegeelement (29) in Draufsicht und in Arbeitsrichtung (7) zumindest im wesentlichen in gleichem Abstand von dem mittleren Gelenk (27) erstreckt wie das dazugehörige Öffnungswerkzeug (11).

12. Sämaschine nach irgend einem der Ansprüche 1 bis 11, ***dadurch gekennzeichnet,* daß** jeder Rampe (160, 380; 160A, 380A) ein Mittel (52, 75) zugeordnet ist, das ihr Schwenken um die Achse (500, 730; 500A, 730A) ihres jeweiligen Gelenks (50, 73; 50A, 73A) gestattet.

13. Sämaschine nach Anspruch 12, ***dadurch gekennzeichnet,* daß** eine Rampe (160; 160A) mit Öffnungswerkzeugen (11) und die entsprechende Rampe (380; 380A) mit Ablegeelementen (29) unabhängig von den anderen Rampen (160, 380; 160A, 380A) in Transportstellung geschwenkt werden können.

14. Sämaschine nach irgend einem der Ansprüche 1 bis 11, ***dadurch gekennzeichnet,* daß** jedem Rampenpaar (160; 160A) mit Öffnungswerkzeugen (11) bzw. jedem Rampenpaar (380; 380A) mit Ablegeelementen (29) ein gemeinsames Mittel (52, 75) zugeordnet ist, das ihr Schwenken um die Achse (500, 730; 500A, 730A) ihres jeweiligen Gelenks (50, 73; 50A, 73A) gestattet.

15. Sämaschine nach irgend einem der Ansprüche 1 bis 14, ***dadurch gekennzeichnet,* daß** das bzw. die das Schwenken der Rampen (160, 380; 160A, 380A) um die Achse (500, 730; 500A, 730) ihres jeweiligen Gelenks (50, 73; 50A, 73A) gestattende(n) Mittel (einen) Hydraulikzylinder (52, 75) aufweist bzw. aufweisen.

16. Sämaschine nach irgend einem der Ansprüche 1 bis 15, ***dadurch gekennzeichnet,* daß** jede Rampe (160, 380; 160A, 380A) in Transportstellung durch eine dazugehörige mechanische Verriegelungsvorrichtung verriegelt wird.

17. Sämaschine nach irgend einem der Ansprüche 1 bis 16, ***dadurch gekennzeichnet,* daß** die Arbeitsstellung jeder Rampe (160, 380; 160A, 380A) durch einen Anschlag bestimmt wird.

18. Sämaschine nach Anspruch 17, ***dadurch gekennzeichnet,* daß** mittels des Anschlags die Horizontalität der Rampe (160, 380; 160A, 380A) eingestellt werden kann.

19. Sämaschine nach irgend einem der Ansprüche 1 bis 18, ***dadurch gekennreichnet,*** daß sich der Trichter (76; 76A) über den Rädern (12) erstreckt.

20. Sämaschine nach irgend einem der Ansprüche 1 bis 19, ***dadurch gekennzeichnet,* daß** der Trichter (76; 76A) an dem vorderen Gestell (13; 13A) befestigt ist.

21. Sämaschine nach irgend einem der Ansprüche 1 bis 20, ***dadurch gekennzeichnet,* daß** der Trichter (76; 76A) mit einer Vorrichtung (79) zur Dosierung der Samen, einer Vorrichtung zur Verteilung der dosierten Samen und einer Vorrichtung (80) zur Beförderung der Samen, die die Samen zu den Ablegeelementen (29) transportiert, kombiniert ist.

22. Sämaschine nach Anspruch 21, ***dadurch gekennzeichnet,* daß** die Vorrichtung (80) zur Beförderung der Samen pneumatisch ist.

23. Sämaschine nach Anspruch 22, ***dadurch gekennzeichnet,* daß** die Verteilvorrichtung ebenfalls pneumatisch ist.

24. Sämaschine nach irgend einem der Ansprüche 1 bis 23, ***dadurch gekennzeichnet,* daß** jede Rampe (380; 380A) mit Ablegeelementen (29) mit einer jeweiligen Deckvorrichtung (65) ausgestattet ist.

25. Sämaschine nach Anspruch 24, ***dadurch gekennzeichnet,* daß** jede Deckvorrichtung (65) mindestens einen Deckfinger (69) aufweisenden Träger (68) umfaßt, wobei diese(r) Träger (68) um ein jeweiliges Gelenk (70) mit zumindest im wesentlichen parallel zur Achse der jeweiligen Rampe (380; 380A) verlaufender Achse schwenken können bzw. kann.

## Claims

1. Seeder (1; 1A) comprising:
- a drawbar (3) intended to be connected at its front end to a motor vehicle (2) by means of an articulation (5),
and
- a body (4; 4A) comprising
* a chassis (9; 9A) made up of:
- a front chassis (13; 13A) connected to the said drawbar (3), carrying opening implements (11) and resting on the ground by means of wheels (12) which are connected thereto so that they can be moved heightwise by means of connecting members (24) and
- a rear chassis (14; 14A) connected to the front chassis (13; 13A) by means of a central articulation (27) of at least substantially vertical longitudinal axis,
and
* a sowing device (10; 10A) comprising, among other things, a hopper (76; 76A) and members (29) for planting seeds in the ground, these members being carried by the rear chassis (14; 14A)
***characterized:***
- ***in*** that the opening implements (11) are connected to at least two mutually independent booms (160; 160A) each connected to the front chassis (13; 13A) by means of a respective articulation (50; 50A), the axis (500; 500A) of which is directed forwards,
- ***in*** that the members (29) for planting seeds in the ground are connected to at least two mutually independent booms (380; 380A) each connected to the rear chassis (14; 14A) by means of a respective articulation (73; 73A), the axis (730; 730A) of which is directed forwards,
- ***in*** that there is provided at least one means (52, 75) allowing the said booms (160, 380; 160A, 380A) to pivot about the axis (500, 730; 500A, 730A) of their respective articulation (50, 73; 50A, 73A) from a work position in which the said booms (160, 380; 160A, 380A) extend at least substantially horizontally and transversely to the direction of work (7) into a transport position in which they extend upwards, respectively, from the said transport position into the said work position,
and
- ***in*** that the hopper (76; 76A) fixed to the front chassis (13 ; 13A) extends between the opening implements (11) and the planting members (29).

2. Seeder according to Claim 1, ***characterized in* that** the axis (500) of an articulation (50) connecting a boom (160) with opening implements (11) to the front chassis (13) is at least substantially parallel to the direction of work (7).

3. Seeder according to Claim 1, ***characterized in* that** the axis (500A) of an articulation (50A) connecting a boom (160A) with opening implements (11) to the front chassis (13A), when viewed from the side, is directed forwards and slightly downwards and, when viewed from above, is at least substantially parallel to the direction of work (7).

4. Seeder according to Claim 1, 2 or 3, ***characterized in* that** the axis (730) of an articulation (73) connecting a boom (380) with planting members (29) to the rear chassis (14) is at least substantially parallel to the direction of work (7).

5. Seeder according to Claim 1, 2 or 3, ***characterized in* that** the axis (730A) of an articulation (73A) connecting a boom (380A) with planting members (29) to the rear chassis (14A), when viewed from the side, is directed forwards and slightly upwards and, when viewed from above, is at least substantially parallel to the direction of work (7).

6. Seeder according to any one of Claims 1 to 5, ***characterized in* that** the articulations (50; 50A) connecting the booms (160; 160A) with opening implements (11) to the front chassis (13; 13A), and respectively the articulations (73; 73A) connecting the booms (380; 380A) with planting members (29) to the rear chassis (14; 14A) extend at least substantially symmetrically with respect to the vertical plane (54) passing through the central articulation (27) and directed in the direction of work (7).

7. Seeder according to any one of Claims 1 to 6, ***characterized in* that** an articulation (50; 50A) connecting a boon, (160; 160A) with opening implements (11) to the front chassis (13; 13A), and respectively an articulation (73; 73A) connecting a boom (380; 380A) with planting members (29) to the rear chassis (14; 14A) is located close to the inner end (51) of the said boom (160; 160A) with opening implements (11) and respectively close to the inner end (74) of the said boom (380: 380A) with planting members (29).

8. Seeder according to any one of Claims 1 to 7, ***characterized in* that** in the work position, the two opening implements (11) extending at the adjacent inner ends (51) of the two booms (160; 160A) are positioned at least substantially like two adjacent opening implements (11) of one and the same boom (160; 160A).

9. Seeder according to any one of Claims 1 to 8, ***characterized in* that** in the work position, the two planting members (29) extending at the adjacent inner ends (74) of the two booms (380; 380A) are positioned at least substantially like two adjacent planting members (29) of one and the same boom (380; 380A).

10. Seeder according to any one of Claims 1 to 9, ***characterized in* that**, in the work position, the booms (160; 160A) with opening implements (11) and the booms (380; 380A) with planting members (29) extend at least substantially orthogonally to the direction of work (7).

11. Seeder according to any one of Claims 1 to 10, ***characterized in* that** each planting member (29) extends, when viewed from above and in the direction of work (7), at least substantially the same distance away from the central articulation (27) as the corresponding opening implement (11).

12. Seeder according to any one of Claims 1 to 11, ***characterized in* that** associated with each boom (160; 380; 160A, 380A) is a means (52, 75) allowing it to pivot about the axis (500, 730; 500A, 730A) of its respective articulation (50, 73; 50A, 73A).

13. Seeder according to Claim 12, ***characterized in* that** a boom (160; 160A) with opening members (11) and the corresponding boom (380; 380A) with planting members (29) can be pivoted into the transport position independently of the other booms (160, 380; 160A, 380A).

14. Seeder according to any one of Claims 1 to 11, ***characterized in* that** associated with each pair of booms (160; 160A) with opening implements (11), and respectively with each pair of booms (380; 380A) with planting members (29), is a common means (52, 75) allowing them to pivot about the axis (500, 730; 500A, 730A) of their respective articulation (50, 73; 50A, 73A).

15. Seeder according to any one of Claims 1 to 14, ***characterized in* that** the means (52, 75) allowing the booms (160, 380; 160A, 380A) to pivot about the axis (500, 730; 500A, 730A) of their respective articulation (50, 73; 50A, 73A) comprise(s) (a) hydraulic ram(s) (52, 75).

16. Seeder according to any one of Claims 1 to 15, ***characterized in* that** each boom (160, 380; 160A, - 380A) is locked in the transport position by a corresponding mechanical locking device.

17. Seeder according to any one of Claims 1 to 16, ***characterized in* that** the work position of each boon, (160, 380; 160A, 380A) is determined by a stop.

18. Seeder according to Claim 17, ***characterized In* that** the said stop allows the horizontality of the said boom (160, 380; 160A, 380A) to be adjusted.

19. Seeder according to any one of Claims 1 to 18, ***characterized in* that** the hopper (76; 76A) extends over the wheels (12).

20. Seeder according to any one of Claims 1 to 19, ***characterized in* that** the hopper (76; 76A) is fastened to the front chassis (13; 13A).

21. Seeder according to any one of Claims 1 to 20, ***characterized in* that** the hopper (76; 76A) is combined with a device (79) for metering out the seeds, a device for dispensing the metered-out seeds and a device (80) for conveying the seeds, transporting the seeds to the planting members (29).

22. Seeder according to Claim 21, ***characterized in* that** the device (80) for conveying the seeds is of the pneumatic type.

23. Seeder according to Claim 22, ***characterized in* that** the dispensing device is also of the pneumatic type.

24. Seeder according to any one of Claims 1 to 23, ***characterized in* that** each boom (380; 380A) with planting members (29) is fitted with a respective earthing-over device (65).

25. Seeder according to Claim 24, ***characterized in* that** each earthing-over device (65) indudes at least one beam (68) carrying earthing-over fingers (69), it being possible for this (these) beam(s) (68) to be pivoted about a respective articulation (70), the axis of which is at least substantially parallel to the axis of the respective boom (380; 380A).
